# EUROPÄISCHE PATENTSCHRIFT

(11) **EP 1 800 534 B1**
(45) Veröffentlichungstag und Bekanntmachung des Hinweises auf die Patenterteilung: **01.07.2009**
(21) Anmeldenummer: 06124954.6
(22) Anmeldetag: 28.11.2006
(51) Int. Cl.: A01F 15/10, A01D 90/04

(54) **Überkopfförderer**
Overhead conveyor
Convoyeur par le haut

(30) Priorität: 24.12.2005 DE 102005062249
(43) Veröffentlichungstag der Anmeldung: 27.06.2007
(73) Patentinhaber: Deere & Company, Moline, IL 61265-8098 (US)
(72) Erfinder: Viaud, Jean, 70100, Gray (FR)
(74) Vertreter: Magin, Ludwig Bernhard

(56) Entgegenhaltungen:
- EP-A1- 0 205 854
- EP-A1- 1 574 124
- EP-A2- 1 062 860
- DE-A1- 19 841 598
- DE-U1- 8 126 403

## Beschreibung

Die Erfindung betrifft einen Überkopfförderer mit einem Rotor, einer Wandung und Messern sowie eine Presse.

Die EP 1 153 539 A1 offenbart eine Rundballenpresse mit einem Überkopfförderer (Fig. 17), der mittels eines Förderrotors Fördergut an einer Wand entlang von einer Pick-Up zu einem Pressraum fördert. Dieses Fördergut kann mittels Messern zerkleinert werden. Während die Stellung der Wand abhängig von der Gutmenge verändert werden kann, bleibt die Stellung der Messer konstant.

Aus der WO 92/09191 A1 geht ebenfalls eine Rundballenpresse mit einem Überkopfförderer hervor, bei dem eine vergleichbare Wand starr angeordnet ist und die Messer in einem Überlastfall ausweichen können.

Die EP-A-1 574124 zeigt eine Schneidvorrichtung mit einem über Kopf fördernden Rotor, wobei mit dem Rotor zusammenwirkende Messer mit einer Wandung verbunden sind und sich mit dieser bewegen können. Die Wandung ist mit den Messern in Umfangsrichtung beweglich, um bei zunehmendem Schneidgutdruck nachgeben zu können. Sobald ein bestimmter Grenzwert überschritten ist, findet zudem eine mehr oder weniger parallele Bewegung weg von dem Rotor statt, um den Durchlassquerschnitt weiter zu vergrößern.

Aus der EP-A-1 062 860 geht eine Schneidvorrichtung für eine Presse in unterschlächtiger Förderweise hervor, bei der der stromaufwärts gelegene Endabschnitt der Wandung um ein Lager schwenkbar ist, während der stromabwärts gelegene mit einem zweiten Wandabschnitt schwenkbar verbunden ist, der selbst in einem stromabwärts gelegenen Bereich schwenkbar an einen Rahmen angeschlossen ist. Diese mehrfache Schwenkausführung dient nicht der Einstellung auf übermäßiges Erntegut sondern der Störungsbeseitigung.
Das der Erfindung zugrunde liegende Problem wird darin gesehen, dass bei zu viel aufgenommenem Gut die Gefahr der Verstopfung besteht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird der gesamte Durchlass im Umkreis des Rotors vergrößert und das Erntegut kann passieren. Die Wandung kann sowohl in sich starr als auch nachgiebig ausgebildet sein. Die Bewegung der Wand mit den Messern kann in beiden Richtungen gesteuert werden oder sie kann wie bei einer Überlastsicherung, beim Eintreffen bestimmter Umstände ausweichen. Wenn die Wandung und die Messer stromabwärts der Rotorachse schwenkbar in einem Lager oder Gestänge an einen Aufbau angeschlossen sind, hat dies zum Ergebnis, dass sich das Ende der Wandung nicht oder kaum bewegt. Als Ergebnis wird die Führung des Ernteguts in stromabwärts gerichteter Richtung, z.B. zu einem Einlaß einer Ballenpreßkammer, nicht verändert, und es kann nicht passieren, dass sich das stromabwärts gelegene Ende in Richtung zu umlaufenden Riemen, Rollen oder zu einem Kettenstabförderer bewegt und mit diesem in Berührung gerät. Dadurch, dass sich die Wandung mit den Messern von dem Rotor wegbewegen kann, ist es auch nicht schädlich, wenn sich der Förderspalt verengt anstatt erweitert. Die Geometrie und die Größe des Öffnungsspalts lassen sich durch die Lage eines Lagers oder eines Gestänges beeinflussen, mit dem die Wandung an einen Rahmen oder dergleichen angeschlossen wird.

Zwar wäre es möglich und z.T. ausreichend, wenn eine stets gegebene Gegenkraft in einem Überlastfall sehr gering wird und ein Ausweichen der Wand zulässt. Eine verbesserte Lösung sieht jedoch vor, dass die Gegenkraft, abhängig von z.B. Gut (bröcklig oder faserig, trocken oder feucht), dem bestehenden Leistungsbedarf der Presse oder dergleichen und dem Leistungsvermögen des Antriebsfahrzeugs angepasst werden kann. Es wäre auch möglich, die Gegenkraft z.B. pulsierend zu erhöhen und zu senken, um das Erntegut hindurch zu befördern. Zudem könnte sich die Gegenkraft degressiv oder progressiv gestalten.

Einer Überlast durch zuviel ankommendes Erntegut kann vorgebeugt werden, indem stromaufwärts der Wandung bereits eine feste Fläche, z.B. in der Art eines Blechs, eines Rechens, eines festen oder beweglichen Bandes etc., vorgesehen ist, die ortsfest bleiben und somit nur eine bestimmte Erntegutmenge ankommen lassen. Da sich die Wandung von dem Rotor weg bewegt, wird eine Relativbewegung zwischen der Wand und der Fläche nicht zu einem Hindernis führen.

Wenn die Wandung nicht nur den Umfang des Rotors bedeckt, sondern sich durch eine mit ihr verbundene Fläche stromaufwärts verlängert, kann sie dadurch den Eintritt des Ernteguts schon frühzeitig leiten und ein abruptes Auftreffen vermeiden. Diese Fläche kann wiederum z.B. in der Art eines Blechs, eines Rechens, eines festen oder beweglichen Bandes etc. ausgebildet und starr oder nachgiebig sein.

Wenn die Fläche auch mit der Wandung fest verbunden ist, so kann sie dieser gegenüber auch verstellbar, z.B. verlängerbar, in der Neigung einstellbar und dergleichen sein. Es wäre auch denkbar, einen stromaufwärts liegenden Endbereich der Fläche festzulegen und diese nur stromabwärts davon mit der Wandung beweglich auszuführen.

Das Erntegut wird optimal geführt, wenn die Fläche an dem Aufbau oder dergleichen schwenkbar angebracht ist und z.B. unter der Wirkung einer Feder stets in Anlage an der sich bewegenden Wandung gehalten wird.

Wenn die stromaufwärts gelegene und mit der Wandung verbundene Fläche zumindest im Wesentlichen radial zu der Rotorachse des Rotors verläuft, wird sowohl ein stumpfer wie auch ein spitzer Winkel im Eintrittsbereich des Ernteguts vermieden, was sowohl eine Gutannahme garantiert, als auch gleichzeitig Verstopfungen verhindert.

Wenn es möglich ist, die Last zu messen, die bei dem Fördervorgang auftrifft, und daraus ein Signal zu bilden, kann daraus im einfachsten Fall die Betätigung einer Hupe, einer Warnleuchte oder dergleichen resultieren. Unter einem Sensor kann schon ein einfacher Schalter verstanden werden und unter einem Signal eine Stromverbindung. Das Signal kann aus einem Stellweg der Wandung, aber auch aus einem Geräusch oder dergleichen hergeleitet werden.

In einer verbesserten Ausführungsform ist ein Steuer- oder Regelkreis vorgesehen, um die verstellbare Gegenkraft ausgehend von einer manuellen Eingabe und/oder von einem Sensorsignal zu verändern. Mit einer solchen Maßnahme kann die Wandung durch die Eingabe durch eine Bedienungsperson vollkommen wegbewegt werden, um z.B. Zugang für die Wartung oder für die Entnahme eines Fremdkörpers zu schaffen. Es kann aber auch das ermittelte und gegebenenfalls verarbeitete Signal verwendet werden, um die Stellkraft zu verändern.

Beispielsweise kann der Durchlaßquerschnitt schnell geöffnet werden, wenn zu erkennen ist, dass ansonsten eine Verstopfung droht.

Wenn die Messer mittels einer Überlastsicherung oder einer Deaktivieriungsvorrichtung an die Wandung angeschlossen sind, können sie auch in außergewöhnlichen Situationen ausweichen, z.B. beim Eintritt eines Fremdkörpers, bzw. leicht entfernt werden, z.B. zur Wartung oder zur Änderung des Messerabstandes.

Pressen, insbesondere Rundballenpressen oder Großballenpressen mit einem Überkopfförderer sind in der Lage, eine höhere Erntegutbergungsleistung zu erbringen, weil deren Betrieb nicht oder kaum aufgrund von Verstopfungen unterbrochen wird. Allerdings kann die Erfindung genauso erfolgreich bei industriell oder gewerblich eingesetzten Pressen verwendet werden. Alternativ kann diese Erfindung aber auch an einem Ladewagen oder dergleichen eingesetzt werden.

In der Zeichnung ist ein nachfolgend näher beschriebenes Ausführungsbeispiel der Erfindung dargestellt. Es zeigt:
- Fig. 1: eine Presse in Seitenansicht und schematischer Darstellung mit einem erfindungsgemäßen Überkopfförderer,
- Fig. 2: den Überkopfförderer aus Figur 1 in vergrößerter Darstellung in einem Überlastzustand,
- Fig. 3: einen Überkopfförderer nach einem zweiten Ausführungsbeispiel und
- Fig. 4: einen Überkopfförderer nach einem dritten Ausführungsbeispiel.

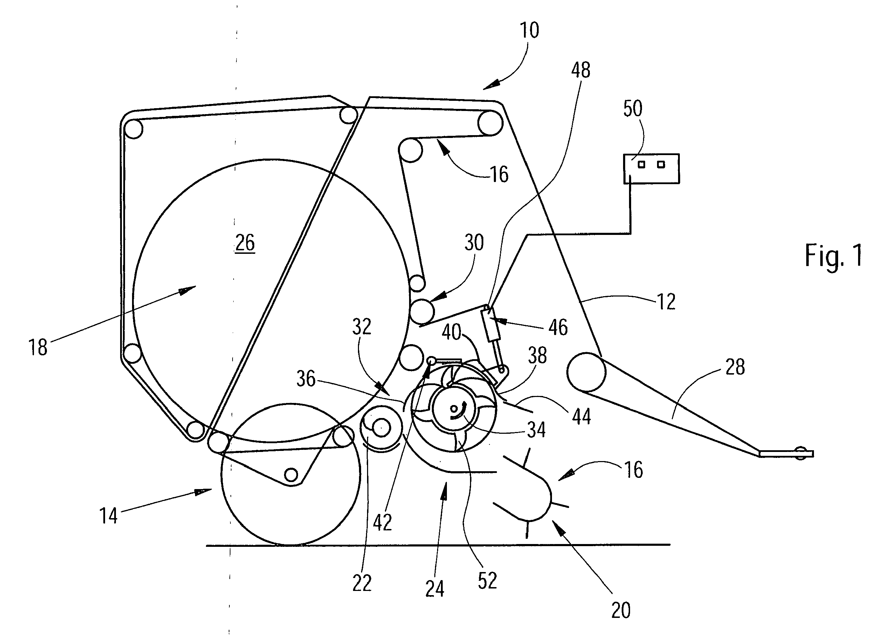

Eine in Figur 1 gezeigte Presse 10 weist einen Aufbau 12, ein Fahrgestell 14, Presselemente 16, einen Pressraum 18, einen Aufnehmer 20, einen Querförderer 22 und einen Überkopfförderer 24 auf.

Die Presse 10 steht hier stellvertretend für jede Bauart einer Presse, d.h. als Rundballenpresse mit festem oder variablen Pressraumvolumen, mit Riemen, Rollen oder Ketten, als Quaderballenpresse, in der Landwirtschaft, in der Industrie oder im Gewerbe, etc. Im herkömmlichen Fall wird eine solche Presse 10 über ein Feld gezogen, um Erntegut, z.B. Stroh, Heu oder Silage vom Boden aufzunehmen und es dem Pressraum 18 oder dem Laderaum eines Ladewagens zuzuführen, um darin z.B. einen Ballen 26 zu bilden.

Der Aufbau 12 enthält Wände und Streben, die auf dem Fahrgestell 14 ruhen und mittels einer Deichsel 28 an ein Fahrzeug, z.B. einen Ackerschlepper anschließbar sind.

Das Fahrgestell 14 besteht aus einer Achse und Rädern in herkömmlicher Weise.

Die Presselemente 16 werden bei dem dargestellten Ausführungsbeispiel von Riemen gebildet, die über Rollen 30 geführt oder mit diesen kombiniert sind. Diese Presselemente 16 belassen einen Abstand, um einen Einlaß 32 für das Erntegut in den Pressraum 18 zu bilden. Die Presselemente 16 können in beiden Richtungen umlaufen.

Der Pressraum 18 ist in diesem Ausführungsbeispiel in konstanter Größe ausgebildet, kann aber beliebig ausgeführt werden.

Der Aufnehmer 20, eine sogenannte Pick-up, nimmt Erntegut vom Boden auf, das in einem Schwad von sich ändernder Stärke und Größe abgelegt ist und auf dem Weg zu dem Pressraum 18 auf eine schmalere Breite zusammengeführt wird. Der Aufnehmer 20 arbeitet überkopf und führt das Erntegut dem Überkopfförderer 24 zu.

Der Querförderer 22 wird von einer Querförderschnecke 22 gebildet, die von gleicher Breite ist wie der Überkopfförderer 24; auch dieser kann grundsätzlich überkopf oder unten fördern. Der Querförderer 22 reicht so nahe wie möglich an den Einlaß 32 heran oder befindet sich sogar in diesem.

Der Überkopfförderer 24 enthält in diesem Ausführungsbeispiel einen Rotor 34, Abstreifer 36, eine Wandung 38, Messer 40, ein Lager 42, eine Fläche 44 und einen Motor 46, denen ein Sensor 48 und ein Steuer- oder Regelkreis 50 zugeordnet ist. Es ist die Aufgabe des Überkopfförderers 24, das Erntegut von dem Aufnehmer 20 anzunehmen und es dem Querförderer 22 geschnitten aufzugeben.

Der Einlass 32 wird oben und unten von einer Rolle 30 begrenzt und schließt unmittelbar and den Querförderer 22 und den Überkopfförderer 24 an.

Der Rotor 34 wird auf nicht gezeigte aber bekannte Weise in Drehung versetzt, so dass er überkopf fördert; im Falle einer Verstopfung kann die Drehrichtung umgekehrt werden. Auf der Umfangsfläche des Rotors 34 sind Mitnehmer 52 vorzugsweise starr angebracht, die zwischen sich Spalte belassen, um an den Messern 40 mit geringem Abstand vorbeigleiten zu können. Die Mitnehmer 52 reichen bis nahe an die Wandung 38 heran, wenn sich diese in der dem Rotor 34 nächst gelegenen Stellung befindet.

Die Abstreifer 36 sind an dem Aufbau 12 befestigt und erstrecken sich ebenfalls in die Zwischenräume zwischen den Mitnehmern 52, um das Erntegut dem Querförderer 22 zuzuführen.

Die Wandung 38 besteht aus einer gegebenenfalls verstärkten und gekrümmten Stahlplatte, die einem Teil des Umfangs des Rotors 34 mit geringem Abstand folgt. Die Wandung 38 ist in ihrem rückwärtigen, stromabwärts gelegenen Endbereich mit dem Lager 42 schwenkbar an den Aufbau 12 angeschlossen und kann sich somit im Wesentlichen radial zu dem Rotor 34 bewegen. Insgesamt folgt die Wandung 38 dem Rotorumfang über ein Viertel.

Die Messer 40 sind von bekannter Ausführung und starr, wenn auch lösbar, mit der Wandung verbunden; sie sind so angeordnet, dass sie das Erntegut im Überkopffördervorgang schneiden. Die Messer 40 können in üblicher Weise angeordnet sein, d.h. mit änderbaren Abständen und gegebenenfalls mit einer Überlastsicherung für Fremdkörper. Diese Überlastsicherung sollte jedoch nicht bei einem normalen Überlastzustand aufgrund der Gutmenge ansprechen.

Das Lager 42 ist an dem Aufbau 12 angebracht und befindet sich stromabwärts des Rotors 34 nahe der oberen Kante des Einlasses 32. "Stromabwärts" steht für einen Bereich unmittelbar hinter der Drehachse bis zu dem Einlass 32. Während das Lager 42 grundsätzlich ortsfest angebracht ist, könnte es in der Lage aber auch einstellbar sein. Die Lage des Lagers 42 und der Anschluß des Endbereichs der Wandung 38 daran hat den Vorteil, dass die Wandung 38 nicht an die Rollen 30 oder um diese herum geführte als Riemen oder Ketten ausgebildete Presselemente 16 gelangt und mit diesen kollidiert.

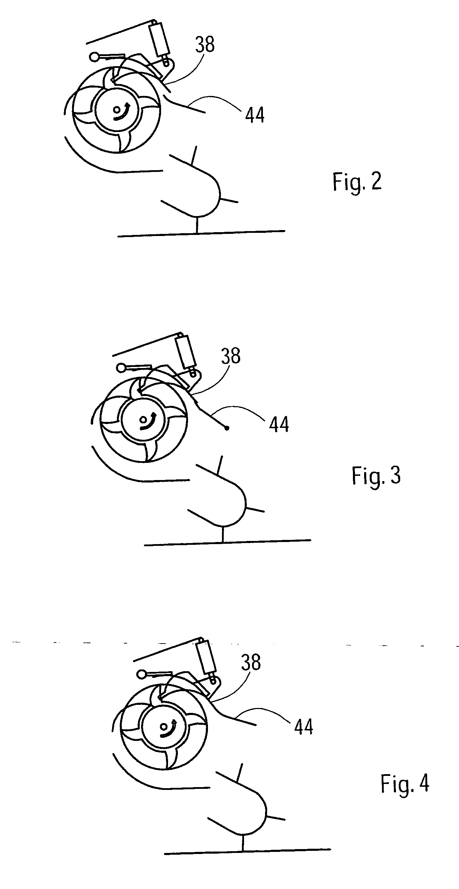

Die Fläche 44 ist der Wandung 38 vorgeschaltet und kann je nach Ausführungsform mit dieser starr, beweglich oder gar nicht verbunden sein. In der Ausführungsform nach Figur 1 ist die Fläche 44 starr an dem Aufbau 12 befestigt und unabhängig von einer Bewegung der Wandung 38. Die Fläche 44 kann wie die Wandung 38, d.h. in sich starr und geschlossen ausgebildet sein; sie kann aber auch als ein Rechen, in sich nachgiebig, aus Kunststoff oder dergleichen ausgebildet sein, solange eine Einleitung des Ernteguts in den Spalt zwischen dem Rotor 34 und der Wandung 38 gewährleistet ist. In einer anderen und nicht gezeigten Ausführungsform könnte die Fläche 44 auch angetrieben werden, z.B. als Förderband oder mit einer Rolle versehen sein. Im Wesentlichen verläuft die Fläche 44 radial zu der Drehachse des Rotors 34. Bei dem Ausführungsbeispiel nach Figur 3 ist die Fläche 44 vertikal schwenkbar an den Aufbau 12 und gegebenenfalls an die Wandung 38 angebracht, so dass sie deren Bewegung folgen kann und somit stets eine lückenlose Führung des Ernteguts zu der Wandung 38 bewirkt. Bei dem Ausführungsbeispiel nach Figur 4 ist die Fläche 44 starr - wenn auch eventuell einstellbar - mit der Wandung 38 verbunden und bewegt sich mit dieser auf und ab.

Der Motor 46 ist in diesem Ausführungsbeispiel als ein linear wirkender Elektromotor ausgebildet, der eine Gewindespindel aufweist und aus- oder eingefahren werden kann. In einem oberen Endbereich ist der Motor 46 an dem Aufbau 12, in einem unteren Endbereich an die Wandung 38 jeweils schwenkbar angeschlossen. Der Motor 46 steht nahezu senkrecht auf der Wandung 38; jedenfalls ist er so ausgerichtet, dass er eine hohe Stellkraft ausüben kann.

Der Sensor 48 kann auf beliebige Weise ausgebildet werden und erkennt, mit welcher Kraft die Wandung 38 während des Betriebs von dem Rotor 34 weg gedrängt wird. Dieser Sensor 48 kann sowohl in den Motor 46 integriert als auch in der Aufhängung des Motors 46 vorgesehen sein. Der Sensor 48 kann aber auch an der Wandung 38, an der Fläche 44, an den Messern 40 oder dergleichen vorgesehen sein, um die Last zu erfassen.

Der Steuer- oder Regelkreis 50 erfasst sowohl das Signal des Sensors 48 als auch gegebenenfalls Signale, die von manuellen Eingaben herrühren und erarbeitet daraus Ausgangssignale. Diese Ausgangssignale können auf den Motor 46 wirken und zu einer Verstellung der Wandung 38 führen; sie können aber auch oder zusätzlich zu einer Anzeigevorrichtung bei dem Fahrer geleitet werden, um den Status anzuzeigen oder einen Alarm auszulösen. Das Ausgangssignal kann aber auch dazu benutzt werden, den Durchsatz, d.h. die aufgenommene Erntegutmenge zu verändern, indem die Drehzahl des Rotors 34 erhöht oder die Fahrgeschwindigkeit reduziert wird. Selbstverständlich sind andere Änderungen denkbar.

Nach alledem ergibt sich folgende Funktion.

Ausgehend von einem Zustand, wie er in Figur 1 gezeigt ist, wird die Presse 10 über ein Feld bewegt, um mittels des Aufnehmers 20 Erntegut vom Boden aufzulesen und durch den Spalt zwischen dem Rotor 34 und der Wandung 38 dem Pressraum 18 aufzugeben. Die Wandung 38 befindet sich mit den Messern 40 so nahe wie möglich an dem Umfangskreis des Rotors 34 mit seinen Mitnehmern 52 und wird dort mittels des Motors 46 gehalten. Wenn die aufgenommene Erntegutmenge ein vertrebares und eventuell vorher festgelegtes Maß überschreitet und der Sensor 48 dies erkennt, können verschiedene Schritte insbesondere von der Steuer- oder Regelvorrichtung 50 durchgeführt werden:
- die Wandung 38 wird von dem Rotor 34 wegbewegt (Fig. 2)
- das übertragbare Drehmoment für den Antrieb des Rotors 34 wird zumindest kurzzeitig erhöht;
- die Drehzahl des Rotors 34 wird zumindest kurzzeitig erhöht;
- die Fortbewegungsgeschwindigkeit des Ackerschleppers wird verlangsamt;
- die von dem Motor 46 ausgeübte Gegenkraft auf die Wandung 38 wird erhöht.

Der Steuer- oder Regelkreis kann so ausgebildet sein, dass er einer Bedienungsperson die Wahl läßt, welcher oder welche Kombination oder welche Reihenfolge dieser Schritte eingeleitet werden soll. Es könnte auch ein Computerprogramm vorgesehen werden, das unter den jeweiligen und von sonstigen Meßgrößen erfaßten Umständen eine bestimmte Konfiguration von Schritten einleitet. Sobald dieser Überlastzustand beendet ist, wird die Wandung 38 wieder in die ursprüngliche Lage zurück bewegt.

Es wäre auch möglich, die Wandung 38 normalerweise nicht unmittelbar an den Wirkungskreis des Rotors 34 heranzuführen, sondern zu diesem einen Abstand zu belassen. In einem Überlastfall könnte dann die Wandung 38 von dem Rotor 34 weg, und in einem Unterlastfall an diesen heran bewegt werden.

## Patentansprüche

1. Überkopfförderer (24) mit einem Rotor (34), einer Wandung (38) und Messern (40), die zusammen mit der Wandung (38) beweglich sind, **dadurch gekennzeichnet, dass** die Wandung (38) und die Messer (40) stromabwärts der Rotorachse schwenkbar an einen Aufbau (12) angeschlossen sind.

2. Überkopfförderer nach Anspruch 1, **dadurch gekennzeichnet, dass** die Wandung (38) und die Messer (40) von einer verstellbaren Gegenkraft beaufschlagt werden.

3. Überkopfförderer nach Anspruch 1 oder 2, **dadurch gekennzeichnet, dass** die Wandung (38) auf eine feste Fläche (44) stromaufwärts von ihr folgt.

4. Überkopfförderer nach einem oder mehreren der vorherigen Ansprüche 1 bis 2, **dadurch gekennzeichnet, dass** die Wandung (38) auf eine mit ihr starr oder beweglich verbundene Fläche (44) stromaufwärts von ihr folgt.

5. Überkopfförderer nach Anspruch 3 oder 4, **dadurch gekennzeichnet, dass** die Fläche (44) beweglich ist und der Wandung (38) folgen kann.

6. Überkopfförderer nach einem oder mehreren der Ansprüche 3 bis 5, **dadurch gekennzeichnet, dass** sich die Fläche (44) im Wesentlichen radial zu der Rotorachse erstreckt.

7. Überkopfförderer nach einem oder mehreren der vorherigen Ansprüche, **dadurch gekennzeichnet, dass** ein Sensor (48) vorgesehen ist, um die Last zu messen, die von dem Gut auf die Messer (40) und/oder die Wandung (38) ausgeübt wird.

8. Überkopfförderer nach einem oder mehreren der vorherigen Ansprüche, **dadurch gekennzeichnet, dass** ein Steuer- oder Regelkreis (50) vorgesehen ist, um die verstellbare Gegenkraft ausgehend von einer manuellen Eingabe und/oder von einem Signal des Sensors (48) zu verändern.

9. Überkopfförderer nach einem oder mehreren der vorherigen Ansprüche, **dadurch gekennzeichnet, dass** die Messer (40) mit einer Überlastsicherung oder einer Deaktivierungsvorrichtung mit der Wandung (38) verbunden sind.

10. Presse (10), insbesondere Rundballenpresse oder Großballenpresse mit einem Überkopfförderer (24) nach einem oder mehreren der vorherigen Ansprüche.

## Claims

1. Overhead conveyor (24) having a rotor (34), a wall (38) and blades (40) which can be moved together with the wall (38), **characterized in that** the wall (38) and the blades (40) are pivotably connected to a body (12) downstream of the rotor axis.

2. Overhead conveyor according to Claim 1, **characterized in that** an adjustable opposing force is applied to the wall (38) and the blades (40).

3. Overhead conveyor according to Claim 1 or 2, **characterized in that** the wall (38) follows a fixed surface (44) upstream of it.

4. Overhead conveyor according to one or more of the preceding Claims 1 to 2, **characterized in that** the wall (38) follows a surface (44) which is rigidly or movably connected to it, upstream of it.

5. Overhead conveyor according to Claim 3 or 4, **characterized in that** the surface (44) is movable and can follow the wall (38).

6. Overhead conveyor according to one or more of Claims 3 to 5, **characterized in that** the surface (44) extends essentially radially with respect to the rotor axis.

7. Overhead conveyor according to one or more of the preceding claims, **characterized in that** a sensor (48) is provided for measuring the load which is applied to the blades (40) and/or the wall (38) by the goods.

8. Overhead conveyor according to one or more of the preceding claims, **characterized in that** an open-loop or closed-loop control circuit (50) is provided in order to change the adjustable opposing force on the basis of a manual input and/or of a signal of the sensor (48).

9. Overhead conveyor according to one or more of the preceding claims, **characterized in that** the blades (40) are connected to the wall (38) by an overload protector or a deactivation device.

10. Press (10), in particular round baler or large bale press with an overhead conveyor (24) according to one or more of the preceding claims.

## Revendications

1. Convoyeur par le haut (24), comprenant un rotor (34), une paroi (38) et des couteaux (40), qui peuvent être déplacés conjointement avec la paroi (38), **caractérisé en ce que** la paroi (38) et les couteaux (40) sont raccordés à une carrosserie (12) de manière à pouvoir pivoter en aval de l'axe du rotor.

2. Convoyeur par le haut selon la revendication 1, **caractérisé en ce que** la paroi (38) et les couteaux (40) sont sollicités par une force conjuguée réglable.

3. Convoyeur par le haut selon la revendication 1 ou 2, **caractérisé en ce que** la paroi (38) suit une surface fixe (44) en amont de celle-ci.

4. Convoyeur par le haut selon l'une quelconque ou plusieurs des revendications précédentes 1 à 2, **caractérisé en ce que** la paroi (38) suit une surface (44) qui lui est connectée rigidement ou de manière mobile en amont de celle-ci.

5. Convoyeur par le haut selon la revendication 3 ou 4, **caractérisé en ce que** la surface (44) est mobile et peut suivre la paroi (38).

6. Convoyeur par le haut selon l'une quelconque ou plusieurs des revendications 3 à 5, **caractérisé en ce que** la surface (44) s'étend essentiellement radialement par rapport à l'axe du rotor.

7. Convoyeur par le haut selon l'une quelconque ou plusieurs des revendications précédentes, **caractérisé en ce qu'**il est prévu un capteur (48) pour mesurer la charge qui est exercée par le produit sur les couteaux (40) et/ou sur la paroi (38).

8. Convoyeur par le haut selon l'une quelconque ou plusieurs des revendications précédentes, **caractérisé en ce qu'**il est prévu un circuit de commande ou de réglage (50) afin de modifier la force conjuguée réglable à partir d'une entrée manuelle et/ou d'un signal du capteur (48).

9. Convoyeur par le haut selon l'une quelconque ou plusieurs des revendications précédentes, **caractérisé en ce que** les couteaux (40) sont connectés à la paroi (38) par une protection contre les surcharges ou un dispositif de coupure.

10. Presse (10), notamment presse à balles rondes ou presse à grosses balles, comprenant un convoyeur par le haut (24) selon l'une quelconque ou plusieurs des revendications précédentes.
